# EUROPEAN PATENT APPLICATION

(11) **EP 3 493 394 A1**
(43) Date of publication of application: **05.06.2019**
(21) Application number: 18210226.9
(22) Date of filing: 04.12.2018
(51) Int. Cl.: H02P 6/08

(54) **MOTOR CONTROLLER**

(30) Priority: 04.12.2017 JP 2017232587
(71) Applicant: Aisin Seiki Kabushiki Kaisha, Kariya-shi Aichi 448-8650 (JP)
(72) Inventor: ENDO, Kazutaka, Kariya, Aichi 448-8650 (JP); KADOYA, Hidetoshi, Kariya, Aichi 448-8650 (JP)
(74) Representative: D Young & Co LLP

(57) **Abstract**

A motor controller (1) includes: an inverter (10) that drives a three-phase motor (M) and includes three sets of arm portions having, between first and second power source lines (91, 92) connected to a potential lower than a potential of the first power source line, high side and low side N-channel field effect transistors (QH, Q1, Q2, Q3; QL, Q4, Q5, Q6); a control portion (20) that drives each of the high side N-channel field effect transistor and the low side N-channel field effect transistor by PWM control; a high voltage output unit (30) that outputs a voltage having a potential higher than a potential applied to the first power source line to a third power source line (93); and a capacitor (40, 40A, 40B, 40C) provided between the third power source line and each of source terminals of the high side N-channel field effect transistors.

## Description

### TECHNICAL FIELD

This disclosure relates to a motor controller driving a three-phase motor.

### BACKGROUND DISCUSSION

Conventionally, inverters having a plurality of switching elements have been used in driving three-phase motors. N-channel field effect transistors have been used as the switching elements so that such inverters are efficiently driven. JP 2003-230294A (Reference 1) discloses an example of techniques related to an inverter configured by means of the N-channel field effect transistor.

Disclosed in Reference 1 is a brushless motor controller (hereinafter, referred to as "controller") for motor driving efficiency improvement. This controller performs correction and control such that the drive voltage of the switching element is lower in a case where the duty ratio of a control signal driving a switching element constituting the inverter is included in a preset range than in a case where the duty ratio is included in another range. As a result, the amplitude of the control signal is reduced, and the motor driving efficiency is improved while switching-related noise is reduced.

An N-channel field effect transistor is used for every high side switching element constituting the inverter described in Reference 1. In general, a so-called bootstrap capacitor is provided between the gate terminal and the source of the N-channel field effect transistor so that the N-channel field effect transistor is put into an ON state from an OFF state, and a voltage (gate-source voltage) of a potential at which the N-channel field effect transistor can be driven is ensured by the bootstrap capacitor being charged in advance. However, in a case where the N-channel field effect transistor has an on-duty of 100%, charging of the bootstrap capacitor becomes insufficient and it is assumed that no gate-source voltage can be ensured for the N-channel field effect transistor to be turned ON next. Accordingly, the maximum value of the on-duty of the high side N-channel field effect transistor needs to be less than 100%. In this case, however, the three-phase motor ends up with limited electrification time and the output of the motor may not reach a desired output.

Thus, a need exists for a motor controller capable of efficiently driving a three-phase motor while ensuring a desired motor output.

### SUMMARY

A feature of a motor controller according to an aspect of this disclosure resides in that the motor controller includes an inverter that drives a three-phase motor and includes three sets of arm portions having, between a first power source line and a second power source line connected to a potential lower than a potential of the first power source line, a high side N-channel field effect transistor having a source terminal connected to the three-phase motor and a drain terminal connected to the first power source line and a low side N-channel field effect transistor having a source terminal connected to the second power source line and a drain terminal connected to the source terminal of the high side N-channel field effect transistor, a control portion that drives each of the high side N-channel field effect transistor and the low side N-channel field effect transistor by PWM control, a high voltage output unit that outputs a voltage having a potential higher than a potential applied to the first power source line to a third power source line, and a capacitor provided between the third power source line and each of the source terminals of the high side N-channel field effect transistors in the three sets of arm portions, in which the control portion causes the high side N-channel field effect transistor of a predetermined arm portion of the three sets of arm portions to be an OFF state from an ON state and, after an elapse of a preset time, causes the high side N-channel field effect transistor of one arm portion of the three sets of arm portions other than the predetermined arm portion to be an ON state from an OFF state.

With this configuration, it is possible to efficiently drive the three-phase motor while ensuring a motor output of the three-phase motor. In addition, the switching of the high side N-channel field effect transistor has a correlation with heat generation of an electronic component, and thus is capable of contributing to electronic component overheating protection as well. Further, the switching is correlated with electric noise, and thus electric noise reduction is also possible.

It is preferable that each of the high side N-channel field effect transistor and the low side N-channel field effect transistor is sequentially switched between the ON and OFF states based on a preset cycle and a timing at which the high side N-channel field effect transistor of the predetermined arm portion is caused to be the OFF state from the ON state is advanced by a preset time than a timing at which the high side N-channel field effect transistor of the one arm portion other than the predetermined arm portion is caused to be the ON state from the OFF state in accordance with the preset cycle.

With this configuration, ON-to-OFF switching of the high side N-channel field effect transistor can be performed in the final stage of UVW-phase switching. Accordingly, it is possible to prevent discharge of the electric charge of the charged capacitor. In addition, an increase in switching noise can be suppressed as compared with a case where ON-to-OFF switching of the high side N-channel field effect transistor is performed at a timing other than the timing described above.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating the configuration of a motor controller;
Fig. 2 is an electrification waveform by the motor controller; and
Fig. 3 is a flowchart illustrating processing of the motor controller.

### DETAILED DESCRIPTION

A motor controller disclosed here is configured to be capable of efficiently driving a three-phase motor. Hereinafter, a motor controller 1 of the present embodiment will be described.

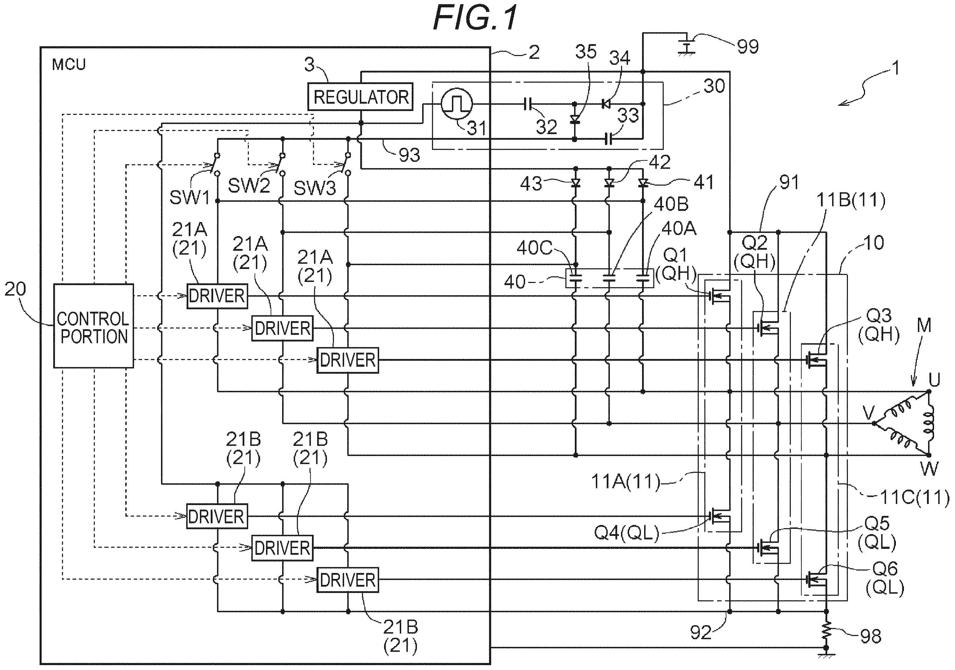

Fig. 1 is a diagram schematically illustrating the configuration of the motor controller 1. As illustrated in Fig. 1, the motor controller 1 is configured to include an inverter 10, a control portion 20, a high voltage output unit 30, and a capacitor 40. In particular, in order to perform processing related to driving of a three-phase motor M, the control portion 20 incorporates hardware, software, or both with a CPU serving as a core member.

The inverter 10 drives the three-phase motor M by controlling a current flowing through a coil of the three-phase motor M based on a control signal transmitted from the control portion 20 (described later). The driving of the three-phase motor M means rotational force output from the three-phase motor M.

The inverter 10 is provided between a first power source line 91 and a second power source line 92 connected to a potential lower than the potential of the first power source line 91. In the present embodiment, the first power source line 91 is connected to a voltage source 99 that outputs a DC voltage having a predetermined potential. Accordingly, a potential lower than the output voltage of the voltage source 99 is applied to the second power source line 92. In the present embodiment, the second power source line 92 is grounded via a resistor 98.

The inverter 10 is configured to include three sets of arm portions 11. Each of the three sets of arm portions 11 has an N-channel field effect transistor (hereinafter, referred to as "FET") QH on a high side and an N-channel field effect transistor (hereinafter, referred to as "FET") QL on a low side. The FETQH has a source terminal connected to the three-phase motor M and a drain terminal connected to the first power source line 91. The FETQL has a source terminal connected to the second power source line 92 and a drain terminal connected to the source terminal of the FETQH. Accordingly, focusing on one set of arm portions 11, the FETQH and the FETQL are connected in series between the first power source line 91 and the second power source line 92, and the three sets of arm portions 11 as described above are connected in parallel in the inverter 10 as a result. Note that the source terminals of the FETQHs of the respective arm portions 11 are respectively connected in a one-to-one correspondence to three terminals of the three-phase motor M. In other words, as illustrated in Fig. 1, the source terminals of the FETQHs of the respective arm portions 11 are respectively connected to three terminals of the three-phase motor M ("U-phase, V-phase, and W-phase terminals" to be described later). Each of the gate terminal of the FETQH and the gate terminal of the FETQL is connected to the control portion 20 (described later).

The control portion 20 drives each of the FETQH and FETQL by pulse width modulation (PWM) control. The PWM control is known, and thus description thereof will be omitted here. In the present embodiment, the control portion 20 outputs a control signal to perform the PWM control. This control signal is input to the gate terminal of the FETQH and the gate terminal of the FETQL. A driver 21 (described later) is provided between the control portion 20 and each gate terminal so that the drive capability of the control signal is enhanced.

The high voltage output unit 30 outputs a voltage having a potential higher than the potential applied to the first power source line 91 to a third power source line 93. In the present embodiment, a DC voltage having a predetermined potential output from the voltage source 99 is applied to the first power source line 91. The high voltage output unit 30 is configured to generate a potential higher than the output voltage of the voltage source 99. In the present embodiment, the high voltage output unit 30 is configured by means of a charge pump circuit having a rectangular wave output unit 31, capacitors 32 and 33, and diodes 34 and 35. The rectangular wave output unit 31 is integrated in a microcomputer unit (hereinafter, "MCU") 2. Once a DC voltage is applied from the voltage source 99 to the MCU 2, a regulator 3 integrated in the MCU 2 steps down the output voltage of the voltage source 99 to a predetermined potential, and a stepped-down DC voltage is applied to the rectangular wave output unit 31. Once the DC voltage is applied, the rectangular wave output unit 31 outputs a rectangular wave oscillating at a predetermined cycle. Since the diode 34 has an anode terminal connected to the voltage source 99, once this rectangular wave is input to the capacitor 32, the DC voltage of the voltage source 99 is boosted by a potential difference corresponding to the amplitude of the rectangular wave. The boosted voltage is smoothed by the capacitor 33, and the DC voltage is output from the high voltage output unit 30 to the third power source line 93.

The capacitor 40 is provided between the third power source line 93 and each of the source terminals of the FETQHs in the three sets of arm portions 11. Assuming that the three sets of arm portions 11 are a first arm portion 11A, a second arm portion 11B, and a third arm portion 11C, the capacitor 40 (referred to as a "first capacitor 40A") is provided between the source terminal of the FETQH of the first arm portion 11A and the third power source line 93, the capacitor 40 (referred to as a "second capacitor 40B") is provided between the source terminal of the FETQH of the second arm portion 11B and the third power source line 93, and the capacitor 40 (referred to as a "third capacitor 40C") is provided between the source terminal of the FETQH of the third arm portion 11C and the third power source line 93.

In the present embodiment, the first capacitor 40A is connected to the third power source line 93 via a switch SW1, the second capacitor 40B is connected to the third power source line 93 via a switch SW2, and the third capacitor 40C is connected to the third power source line 93 via a switch SW3. Accordingly, when the switches SW1, SW2, and SW3 are in a closed state, the first capacitor 40A, the second capacitor 40B, and the third capacitor 40C are charged with the voltages of the potential differences between the output voltage of the high voltage output unit 30 and the potentials of the source terminals of the FETQHs, respectively. Note that the terminals connected to the respective switches SW1, SW2, and SW3 of the first capacitor 40A, the second capacitor 40B, and the third capacitor 40C are connected to the cathodes of diodes 41, 42, and 43 having anodes connected to the regulator 3.

The driver 21 is integrated in the MCU 2 and is configured by means of an amplifier. The driver 21 includes three first drivers 21A improving the drive capability of the control signal input to each FETQH and three second drivers 21B improving the drive capability of the control signal input to each FETQL. Each first driver 21A has two power source terminals. The two power source terminals are connected to the third power source line 93 and the source terminal of the FETQH having the gate terminal to which each first driver 21A is connected. Accordingly, each first driver 21A is driven by the output voltage of the high voltage output unit 30 when the switches SW1, SW2, and SW3 are in a closed state and by the energy charged in the first capacitor 40A, the second capacitor 40B, and the third capacitor 40C as a power source when the switches SW1, SW2, and SW3 are in an open state. Each second driver 21 B has two power source terminals. The two power source terminals are connected to the output terminal of the regulator 3 and the source terminal of the FETQL having the gate terminal to which each second driver 21B is connected. Accordingly, each second driver 21B is driven by the output voltage of the regulator 3 as a power source.

Here, the switch SW1 is closed in a case where a control signal is input from the control portion 20 to the first driver 21A to which the switch SW1 is connected, that is, in a case where driving is performed for control signal drive capability improvement. The switch SW1 is put into an open state in the other cases. Likewise, the switch SW2 is closed in a case where a control signal is input from the control portion 20 to the first driver 21A to which the switch SW2 is connected, that is, in a case where driving is performed for control signal drive capability improvement. The switch SW2 is put into an open state in the other cases. The switch SW3 is closed in a case where a control signal is input from the control portion 20 to the first driver 21A to which the switch SW3 is connected, that is, in a case where driving is performed for control signal drive capability improvement. The switch SW3 is put into an open state in the other cases. Accordingly, in a case where each first driver 21A is driven, the energy charged in each of the first capacitor 40A, the second capacitor 40B, and the third capacitor 40C is used immediately after the driving of the first driver 21A.

However, the energy charged in each of the first capacitor 40A, the second capacitor 40B, and the third capacitor 40C when each of the switches SW1, SW2, and SW3 is in a closed state is used as a power source of each first driver 21A even when each of the switches SW1, SW2, and SW3 is open and decreases. This is because the high voltage output unit 30 has an insufficient electric power supply capacity (generated energy). Accordingly, immediately after each of the switches SW1, SW2, and SW3 is closed, the energy charged in each of the first capacitor 40A, the second capacitor 40B, and the third capacitor 40C is reduced, the drive capability of the control signal may be insufficient, and it is impossible to appropriately drive the FETQH. In other words, after charging, the electric charge of each of the first capacitor 40A, the second capacitor 40B, and the third capacitor 40C gradually decreases due to the consumption current of the first driver 21A, and thus an electric charge shortage arises at the next FETQH ON timing and the FETQH cannot be used in a saturated state when the rotation speed of the three-phase motor M is low (phase switching is slow).

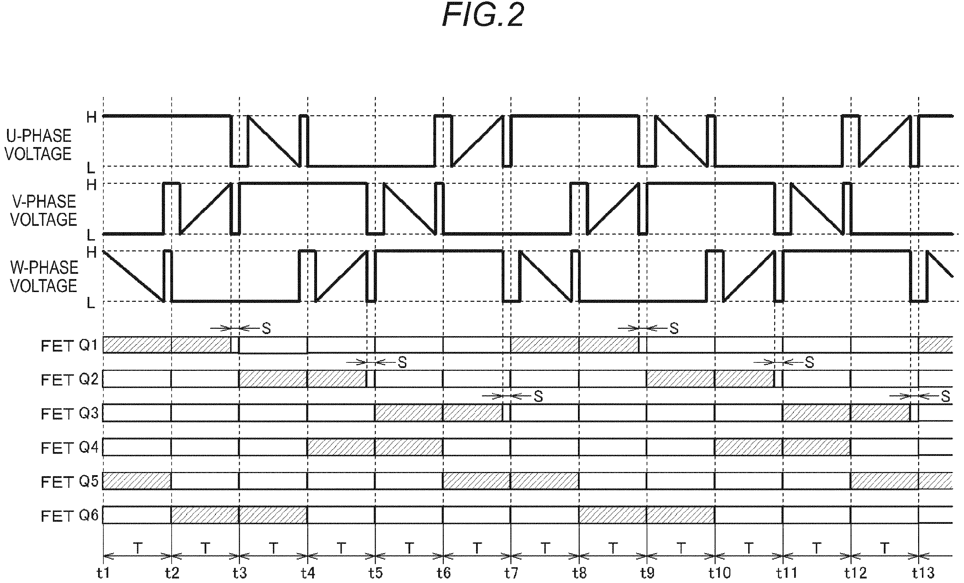

In this regard, the control portion 20 is configured such that the FETQH of one arm portion 11 other than predetermined one of the three sets of arm portions 11 is put into an ON state from an OFF state after the elapse of a preset time from putting of the FETQH of the predetermined arm portion 11 into an OFF state from an ON state. This control will be described based on the electrification waveform of each portion of the motor controller 1 illustrated in Fig. 2. Note that the following description assumes, for ease of understanding, that the three FETQHs are FETQ1, FETQ2, and FETQ3 and the three FETQLs are FETQ4, FETQ5, and FETQ6. Illustrated in Fig. 2 are electrification waveforms in a steady state of the driving of the three-phase motor M.

The voltage waveforms of the U-phase terminal, the V-phase terminal, and the W-phase terminal of the three-phase motor M are illustrated at the upper part of Fig. 2. In Fig. 1, the U-phase terminal, the V-phase terminal, and the W-phase terminal are denoted with reference numerals U, V, and W, respectively. The respective operation states of the FETQ1, the FETQ2, the FETQ3, the FETQ4, the FETQ5, and the FETQ6 are illustrated at the lower part of Fig. 2. The hatched parts indicate that the corresponding FETs are turned ON.

Here, as described above, each of the FETQH and the FETQL is driven by the PWM control by the control portion 20. Accordingly, each of the FETQH and the FETQL is sequentially switched between the ON and OFF states based on a preset cycle T. In addition, in order to prevent an electric charge shortage at the next FETQH ON timing as described above, the FETQ2 is switched from the OFF state to the ON state after, for example, a preset time S has elapsed since switching of the FETQ1 from the ON state to the OFF state. During this time S, the second capacitor 40B is charged with the energy that puts the FETQ2 into the ON state.

Likewise, the FETQ3 is switched from the OFF state to the ON state after the preset time S has elapsed since switching of the FETQ2 from the ON state to the OFF state, and the capacitor 40 is charged with the energy (electric charge) that puts the FETQ3 into the ON state during this time S. The FETQ1 is switched from the OFF state to the ON state after the preset time S has elapsed since switching of the FETQ3 from the ON state to the OFF state, and the capacitor 40 is charged with the energy (electric charge) that puts the FETQ1 into the ON state during this time S. As a result, each capacitor 40 is capable of supplying a potential difference equal to or greater than the gate-source voltage of each FET put into the ON state from the OFF state, and thus it is possible to smoothly switch the FET from the OFF state to the ON state.

Here, in the present embodiment, the timing at which the FETQH of the predetermined arm portion 11 is put into the OFF state from the ON state is advanced by the preset time S than the timing at which the FETQH of the arm portion 11 other than the predetermined arm portion 11 is put into the ON state from the OFF state in accordance with the preset cycle T. In other words, focusing on the FETQ1, for example, the timing at which the FETQ1 is put into the OFF state from the ON state is the timing that is advanced by the preset time S than t3, which is the timing of the FETQ2 that is put into the ON state from the OFF state next. Accordingly, from t2 to t3, the time during which the FETQ1 is turned ON is controlled so as to be shorter than the time of switching to the ON state in the immediately preceding cycle T related to t1 to t2. Likewise, the timing at which the FETQ2 is put into the OFF state from the ON state is the timing that is advanced by the preset time S than the timing of the FETQ3 that is put into the ON state from the OFF state next, and the timing at which the FETQ3 is put into the OFF state from the ON state is the timing that is advanced by the preset time S than the timing of the FETQ1 that is put into the ON state from the OFF state next. Note that this control for advancing the ON-to-OFF timing of the FETQH is especially effective when the rotation speed of the three-phase motor M is low.

Here, setting of the "preset time S" will be described. The above-described relationship is represented by 0.9×Vc=Vc(1-exp(-t/(R×C)))...(1), in which R[Q] represents the combined resistance of a resistance value R1 of the resistor 98 in Fig. 1, an ON resistance R2 of the FET that is put into the ON state during charging of the capacitor 40 among the FETQ4, the FETQ5, and the FETQ6, a resistance component R3 of the capacitor 40, and a pattern resistance (impedance) R4 of a current path during charging of the capacitor 40, C[F] represents the capacitance of the capacitor 40, Vc[V] represents the inter-terminal voltage of the capacitor 40 that is fully charged, and 0.9×Vc[V] (that is, 90% of Vc) represents the voltage that is necessary for driving of any one of the FETQ1, the FETQ2, and the FETQ3. The "preset time S" may be set at a time t that satisfies the expression (1). Note that "0.9" related to the above "0.9×Vc[V] representing the voltage that is necessary for driving of any one of the FETQ1, the FETQ2, and the FETQ3" is an example and is set by FET to be used. In addition, "0.9" is not limitative and may be replaced with "1 (that is, 100% of Vc)" or "0.75 (that is, 75% of Vc)".

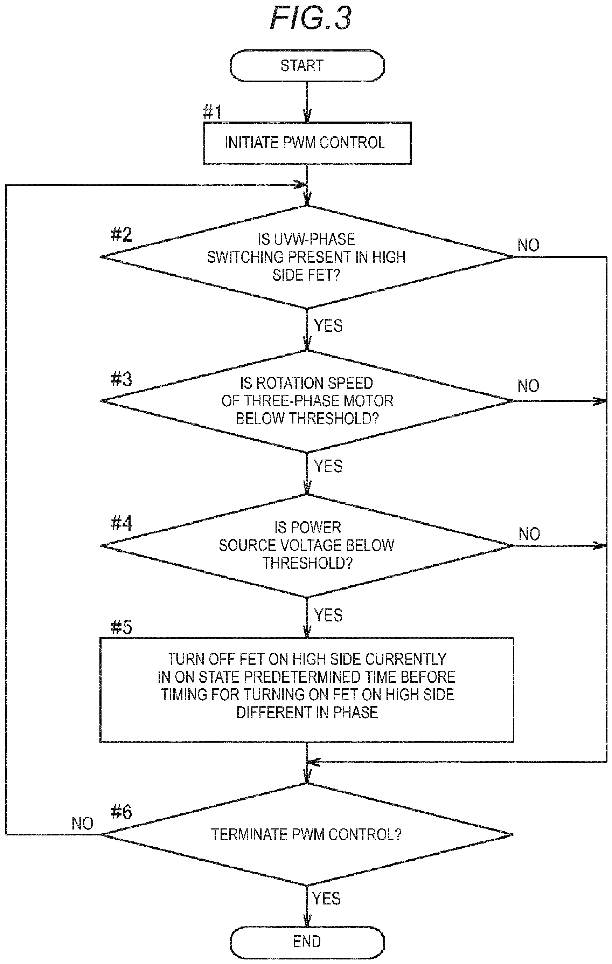

Next, processing of the motor controller 1 will be described with reference to the flowchart of Fig. 3. First, the PWM control is initiated by the control portion 20 (Step #1). At this time, the control portion 20 turns OFF the currently ON FETQH a predetermined time before the timing of turning ON the FETQH different in phase from the FETQH (Step #5) on condition that there is UVW-phase switching in the FETQH (Step #2: Yes), the current rotation speed of the three-phase motor M is less than a preset motor rotation speed threshold value for control determination (Step #3: Yes), and the current power source voltage (output voltage of the voltage source 99) is less than a preset power source voltage for control determination (Step #4: Yes). In a case where the PWM control continues (Step #6: No), the processing continues from Step #2. The processing is terminated in a case where the PWM control is terminated (Step #6: Yes).

The processing is performed in Step #6 when at least there is no UVW-phase switching in the FETQH (Step #2: No), the current rotation speed of the three-phase motor M is not less than the preset motor rotation speed threshold value for control determination (Step #3: No), or the current power source voltage (output voltage of the voltage source 99) is not less than the preset power source voltage for control determination (Step #4: No).

### Other Embodiments

Although the timing at which the FETQH of the predetermined arm portion 11 is put into the OFF state from the ON state is advanced by the preset time S than the timing at which the FETQH of the arm portion 11 other than the predetermined arm portion 11 is put into the ON state from the OFF state in accordance with the preset cycle T according to the above embodiment, the OFF state may also continue for the preset time S at any timing within the preset cycle T when the FETQH of the predetermined arm portion 11 is ON.

Although the control portion 20 turns OFF the currently ON FETQH a predetermined time before the timing of turning ON the FETQH different in phase from the FETQH (Step #5) on condition that there is UVW-phase switching in the FETQH (Step #2: Yes), the current rotation speed of the three-phase motor M is less than a preset motor rotation speed threshold value for control determination (Step #3: Yes), and the current power source voltage (output voltage of the voltage source 99) is less than a preset power source voltage for control determination (Step #4: Yes) especially by using the flowchart of Fig. 3 according to the above embodiment, the control portion 20 can also be configured to turn OFF the currently ON FETQH a predetermined time before the timing of turning ON the FETQH different in phase from the FETQH, regardless of the power source voltage and the rotation speed of the three-phase motor M, in a case where there is UVW-phase switching in the FETQH (Step #2: Yes).

Alternatively, the control portion 20 can be configured to turn OFF the currently ON FETQH a predetermined time before the timing of turning ON the FETQH different in phase from the FETQH in a case where there is UVW-phase switching in the FETQH (Step #2: Yes) with the current rotation speed of the three-phase motor M less than the preset motor rotation speed threshold value for control determination or the current power source voltage less than the preset power source voltage for control determination.

The embodiments disclosed here can be used for a motor controller driving a three-phase motor.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. A motor controller (1) comprising:
an inverter (10) that drives a three-phase motor (M) and includes three sets of arm portions having, between a first power source line (91) and a second power source line (92) connected to a potential lower than a potential of the first power source line, a high side N-channel field effect transistor (QH, Q1, Q2, Q3) having a source terminal connected to the three-phase motor and a drain terminal connected to the first power source line and a low side N-channel field effect transistor (QL, Q4, Q5, Q6) having a source terminal connected to the second power source line and a drain terminal connected to the source terminal of the high side N-channel field effect transistor;
a control portion (20) that drives each of the high side N-channel field effect transistor and the low side N-channel field effect transistor by PWM control;
a high voltage output unit (30) that outputs a voltage having a potential higher than a potential applied to the first power source line to a third power source line (93); and
a capacitor (40, 40A, 40B, 40C) provided between the third power source line and each of the source terminals of the high side N-channel field effect transistors in the three sets of arm portions,
wherein the control portion causes the high side N-channel field effect transistor of a predetermined arm portion of the three sets of arm portions to be an OFF state from an ON state and, after an elapse of a preset time, causes the high side N-channel field effect transistor of one arm portion of the three sets of arm portions other than the predetermined arm portion to be an ON state from an OFF state.

2. The motor controller according to claim 1,
wherein each of the high side N-channel field effect transistor and the low side N-channel field effect transistor is sequentially switched between the ON and OFF states based on a preset cycle, and
a timing at which the high side N-channel field effect transistor of the predetermined arm portion is caused to be the OFF state from the ON state is advanced by a preset time than a timing at which the high side N-channel field effect transistor of the one arm portion other than the predetermined arm portion is caused to be the ON state from the OFF state in accordance with the preset cycle.
